# EUROPEAN PATENT APPLICATION

(11) **EP 4 759 764 A1**
(43) Date of publication of application: **17.06.2026**
(21) Application number: 24855331.5
(22) Date of filing: 26.04.2024
(51) Int. Cl.: B65H 19/22, B65H 19/00, B65H 26/08

(54) **COATING SYSTEM AND COATING METHOD**

(30) Priority: 22.08.2023 CN 202311061991
(71) Applicant: Contemporary Amperex Technology Co., Limited, Ningde, Fujian 352100 (CN)
(72) Inventor: ZHAN, Bingyang, Ningde, Fujian 352100 (CN); ZHANG, Jingdong, Ningde, Fujian 352100 (CN)
(74) Representative: Gong, Jinping
(86) International application number: PCT/CN2024/090140
(87) International publication number: WO 2025/039601

(57) **Abstract**

This application discloses a coating system and a coating method. The coating system determines a target reel to be wound based on state parameters of chucks for clamping reels in a winding apparatus (11); and when it is determined that current coating process parameters satisfy a reel change condition, the winding apparatus (11) is controlled to change reels to wind a material using the target reel. Through the state parameters of the chucks, the coating process parameters, and the reel change condition, automatic switching to the target reel for winding the material in the winding apparatus is achieved, significantly improving the automation level of reel change.

## Description

### CROSS-REFERENCE TO RELATED APPLICATIONS

This application claims priority to Chinese Patent Application No. 202311061991.X, filed on August 22, 2023 and entitled "COATING SYSTEM AND COATING METHOD", which is incorporated herein by reference in its entirety.

### TECHNICAL FIELD

This application relates to the field of coating, and specifically, to a coating system and a coating method.

### BACKGROUND

Electrode plates are the foundation of traction batteries, affecting electrochemical performance and safety of the traction batteries. An electrode plate typically includes a current collector and a coating applied on the current collector. Currently, the electrode plate is typically prepared using an electrode plate coating process of applying a slurry on the current collector, drying an organic solvent in the slurry, and winding a roll using a winding apparatus.

The start or end of winding by the winding apparatus is typically controlled manually. That is, the reel change is determined by manual judgment, which results in a relatively low automation level of the winding apparatus.

The above descriptions are used solely for providing background information related to this application and do not necessarily constitute prior art.

### SUMMARY

In view of the above issues, embodiments of this application provide a coating system and a coating method to improve the automation level of reel change.

According to a first aspect of embodiments of this application, a coating system is provided, including:
a winding apparatus, a driving apparatus, an unwinding apparatus, and a coating machine controller;
where the driving apparatus is configured to drive a material unwound by the unwinding apparatus to move toward the winding apparatus, and the winding apparatus is configured to wind the material; and
the coating machine controller is configured to acquire state parameters of chucks for clamping reels in the winding apparatus, determine a target reel to be wound in the winding apparatus based on the state parameters, and control the winding apparatus to change reels to wind the material using the target reel when it is determined that current coating process parameters satisfy a reel change condition.

In the solution provided by these embodiments, the target reel to be wound is determined based on the state parameters of the chucks for clamping reels in the winding apparatus; and the winding apparatus is controlled to change reels to wind the material using the target reel when it is determined that the current coating process parameters satisfy the reel change condition. Through the state parameters, the coating process parameters, and the reel change condition, automatic switching to the target reel for winding the material in the winding apparatus is achieved, significantly improving the automation level of reel change.

In some embodiments, the coating machine controller is configured to:
acquire a reel diameter of the target reel;
acquire, from the reel change condition, a target reel change condition having a mapping relationship with the reel diameter of the target reel;
determine that the current coating process parameters satisfy the reel change condition when it is determined that the current coating process parameters satisfy the target reel change condition.

In the solution provided by these embodiments, the target reel change condition is determined based on the reel diameter of the target reel, and the current coating process parameters are judged using the target reel change condition. Since the target reel change condition matches the reel diameter of the target reel, as compared with a case where the current coating process parameters are judged using other reel change conditions that do not match the reel diameter of the target reel, a more accurate judgment result may be obtained in a case where the current coating process parameters are judged using the target reel change condition in these embodiments.

In some embodiments, the coating system further includes:
a cutting apparatus configured to cut the material passing through the cutting apparatus when it is determined that the current coating process parameters satisfy the reel change condition;
where the coating machine controller is configured to:
   determine that the coating process parameters satisfy the target reel change condition when a cutting action of the cutting apparatus is detected; and
   determine that the coating process parameters satisfy the target reel change condition when the cutting action of the cutting apparatus is not detected and coating state parameters included in the coating process parameters satisfy the target reel change condition.

In the solution provided by these embodiments, the determination of the target reel change condition based on the cutting action of the cutting apparatus and the coating state parameters is specified. This not only achieves automatic reel change but also features a simple and feasible solution that is more applicable to actual operating conditions.

In some embodiments, the coating machine controller is further configured to:
generate a reel change signal when it is determined that the current coating process parameters satisfy the reel change condition, where the reel change signal is used to indicate acquisition of film roll sheet information of the material wound by the target reel.

In the solution provided by these embodiments, as compared with a case where an operator walks to an upper computer of the coating system and manually operates to create a new film roll sheet after manual reel change, in these embodiments, after the target reel is controlled to perform winding, the reel change signal is generated to generate the film roll sheet information of the material wound by the target reel, significantly reducing a time interval between the winding of the roll and the creation of the film roll sheet, and improving the consistency between the roll on the target reel and the film roll sheet information.

In some embodiments, the coating system further includes a process control system; and
the coating machine controller is further configured to:
update state parameters corresponding to a chuck for clamping the target reel when it is determined that the process control system has acquired the film roll sheet information based on the reel change signal.

In the solution provided by these embodiments, updating the state parameters corresponding to the chuck of the target reel can facilitate the accurate determination of a new target reel subsequently. In addition, the updating occasion can reduce unnecessary processing procedures. For example, if the state parameters are updated after a time interval following the acquisition of the film roll sheet information, the current target reel may be inevitably identified as a new target reel during subsequent determination of the new target reel. Although the current target reel can be excluded through later reel change conditions, both the process of excluding the current target reel and the process of determining the current target reel as the new target reel may complicate the overall procedure.

In some embodiments, the coating machine controller includes a display screen, the display screen is configured to display a film roll management interface, and the film roll management interface includes a mode configuration component; and
the coating machine controller is configured to, when a user configures a winding mode of the target reel as an automatic mode through the mode configuration component, perform the following steps: acquiring the state parameters of the chucks for clamping reels in the winding apparatus; determining the target reel to be wound in the winding apparatus based on the state parameters; and controlling the winding apparatus to change reels to wind the material using the target reel when it is determined that the current coating process parameters satisfy the reel change condition.

In the solution provided by these embodiments, the mode configuration component allows the user to select manual reel change or automatic reel change based on actual needs, helping to improve the flexibility in reel change.

In some embodiments, the film roll management interface further includes a reel diameter display component;
where the reel diameter display component is configured for the user to configure a reel diameter threshold in the reel change condition.

In the solution provided by these embodiments, providing the reel diameter display component on the film roll management interface enables the user to configure the reel diameter threshold in the reel change condition, helping the user to set the reel change condition based on their needs.

In some embodiments, the film roll management interface further includes a new film roll creation component and a reel change signal invalidity display component; and
the coating machine controller is further configured to: when the target reel is a non-empty reel, detect a new film roll creation instruction triggered by the user through the new film roll creation component within a preset duration for generating the reel change signal, and mark the reel change signal as valid when the new film roll creation instruction is detected; and when the new film roll creation instruction is not detected within the preset duration for generating the reel change signal, display, through the reel change signal invalidity display component, indication information for indicating that the reel change signal is invalid, and set identification information for indicating the adoption of film roll sheet information from the most recent winding process.

In the solution provided by these embodiments, marking the reel change signal through the new film roll creation instruction of the new film roll creation component can improve the accuracy of the film roll sheet information for the target reel.

In some embodiments, the coating machine controller is configured to:
display the film roll management interface when a target menu item selected in a menu bar of an interface of the display screen is automatic control, and a sub-menu item selected in the target menu item is film roll sheet information.

In the solution provided by these embodiments, the settings of the menu item and sub-menu item in the interface of the display screen enable the interface of the display screen to display not only the film roll management interface but also other interfaces as needed, helping to improve the utilization of the display screen.

In some embodiments, the winding apparatus includes:
a turret, a first rotating shaft and a second rotating shaft disposed on the turret, a first chuck disposed on the first rotating shaft, and a second chuck disposed on the second rotating shaft;
where the first chuck is configured to clamp a first reel, and the second chuck is configured to clamp a second reel; and
the coating machine controller is configured to: acquire state parameters of the first chuck and the second chuck; and determine the target reel from the first reel and the second reel based on the state parameters of the first chuck and the second chuck.

According to the winding apparatus provided by these embodiments, the structures of the turret and the rotating shafts allow the winding apparatus to support multiple reels, laying the foundation for automatic reel change.

In some embodiments, the coating system further includes:
a coating die and a coating oven;
where the coating die is configured to coat the material passing through the coating die; and
the coating oven is configured to bake the material coated by the coating die.

In the solution provided by these embodiments, coating the material using the coating die and the coating oven helps to improve the coating efficiency of the coating system for the material.

According to a second aspect of embodiments of this application, a coating method is provided, applied to the coating system described in the first aspect, where the method includes:
acquiring, by the coating machine controller, state parameters of chucks for clamping reels in the winding apparatus;
determining, by the coating machine controller, a target reel to be wound in the winding apparatus based on the state parameters; and
when the coating machine controller determines that current coating process parameters satisfy a reel change condition, controlling the winding apparatus to change reels to wind a material using the target reel.

In some embodiments, the determining, by the coating machine controller, that current coating process parameters satisfy a reel change condition includes:
acquiring, by the coating machine controller, a reel diameter of the target reel;
acquiring, by the coating machine controller from the reel change condition, a target reel change condition having a mapping relationship with the reel diameter of the target reel; and
when the coating machine controller determines that the current coating process parameters satisfy the target reel change condition, determining that the current coating process parameters satisfy the reel change condition.

In some embodiments, the coating system further includes a cutting apparatus; and
the determining, by the coating machine controller, that the current coating process parameters satisfy a target reel change condition includes:
determining, by the coating machine controller, that the coating process parameters satisfy the target reel change condition when a cutting action of the cutting apparatus is detected; and
determining, by the coating machine controller, that the coating process parameters satisfy the target reel change condition when the cutting action of the cutting apparatus is not detected and coating state parameters included in the coating process parameters satisfy the target reel change condition.

In some embodiments, the method further includes:
generating, by the coating machine controller, a reel change signal when it is determined that the current coating process parameters satisfy the reel change condition, where the reel change signal is used to indicate acquisition of film roll sheet information of a roll wound by the target reel.

In some embodiments, the coating system further includes a process control system; and
the method further includes:
updating, by the coating machine controller, state parameters corresponding to a chuck for clamping the target reel when it is determined that the process control system has acquired the film roll sheet information based on the reel change signal.

In some embodiments, the coating system further includes a display screen; and the coating machine controller is configured to display a film roll management interface through the display screen, the film roll management interface including a new film roll creation component, where the new film roll creation component is configured for a user to trigger a new film roll creation instruction; and
the method further includes:
detecting, by the new film roll creation component when the target reel is a non-empty reel, a new film roll creation instruction triggered by the user within a preset duration for generating the reel change signal, and marking the reel change signal as valid when the new film roll creation instruction is detected; and displaying, by the reel change signal invalidity display component when the new film roll creation instruction is not detected within the preset duration for generating the reel change signal, indication information for indicating that the reel change signal is invalid, and setting identification information for indicating the adoption of film roll sheet information from the most recent winding process.

In some embodiments, the method further includes:
displaying the film roll management interface when a target menu item selected in a menu bar of an interface of the display screen is automatic control, and a sub-menu item selected in the target menu item is film roll sheet information.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Various other advantages and benefits will become apparent to those of ordinary skill in the art upon reading the detailed description of the preferred embodiments below. The drawings are provided solely for the purpose of illustrating the preferred embodiments and are not to be considered as limiting this application. Throughout the drawings, identical components are denoted by identical reference signs. In the drawings:
FIG. 1 is a schematic diagram of a coating system according to one or more embodiments of this application;
FIG. 2 is a schematic diagram of an interface of a display screen according to one or more embodiments of this application;
FIG. 3 is a schematic diagram of a winding apparatus according to one or more embodiments of this application;
FIG. 4 is a schematic diagram of a winding apparatus according to one or more embodiments of this application;
FIG. 5 is a schematic flowchart of a coating method according to one or more embodiments of this application;
FIG. 6 is another schematic flowchart of a coating method according to one or more embodiments of this application; and
FIG. 7 is still another schematic flowchart of a coating method according to one or more embodiments of this application.

### DESCRIPTION OF EMBODIMENTS

Embodiments of the technical solutions of this application will be described in detail below in conjunction with the drawings. The following embodiments are merely intended for a clearer description of the technical solutions of this application and therefore are used as just examples which do not constitute any limitations on the protection scope of this application.

Unless otherwise defined, all technical and scientific terms used herein have the same meaning as commonly understood by those skilled in the technical field of this application; the terms used herein are only for the purpose of describing specific embodiments and are not intended to limit this application; the terms "including", "comprising", "having", and any variations thereof in the description, claims, and the above description of the drawings of this application are intended to cover non-exclusive inclusion.

In the description of the embodiments of this application, the technical terms "first", "second", and the like are used only to distinguish different objects and should not be understood as indicating or implying relative importance or implicitly indicating the number, specific order, or primary-secondary relationship of the technical features indicated. In the description of the embodiments of this application, "multiple" means two or more, unless otherwise explicitly and specifically defined.

Reference to "embodiment" herein means that a specific feature, structure, or characteristic described in connection with the embodiment may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein can be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this application, the term "multiple" means more than two (inclusive). Similarly, "multiple groups" means more than two (inclusive) groups, and "multiple pieces" means more than two (inclusive) pieces.

Energy conservation and emission reduction are crucial to sustainable development of the automobile industry. Electric vehicles, with their advantages in energy conservation and emission reduction, have become an important part of sustainable development of the automobile industry. For electric vehicles, battery technology is an important factor in connection with their development.

Electrode plates are the foundation of traction batteries, affecting electrochemical performance and safety of the traction batteries. An electrode plate typically includes a current collector and a coating applied on the current collector. Currently, the electrode plate is typically prepared using an electrode plate coating process of applying a slurry on the current collector, drying an organic solvent in the slurry, and winding a roll using a winding apparatus.

The start or end of winding by the winding apparatus is typically controlled manually. Therefore, in cases where the winding apparatus may be equipped with multiple reels and the multiple reels can be switched to perform winding, the switching of reels is also determined and implemented manually, resulting in a relatively low automation level of the winding apparatus.

To improve the automation level of reel change, one or more embodiments of this application provide a coating system, where a target reel to be wound is determined based on state parameters of chucks for clamping reels in a winding apparatus; and when it is determined that current coating process parameters satisfy a reel change condition, the winding apparatus is controlled to change reels to wind a material using the target reel. Through the state parameters of the chucks, the coating process parameters, and the reel change condition, automatic switching to the target reel for winding the material in the winding apparatus is achieved, significantly improving the automation level of reel change.

The coating system disclosed in the embodiments of this application performs operations including but not limited to winding materials such as paper, cloth, plastic films, current collectors, and battery electrode plates, and controlling a winding apparatus to achieve automatic reel change during the winding process.

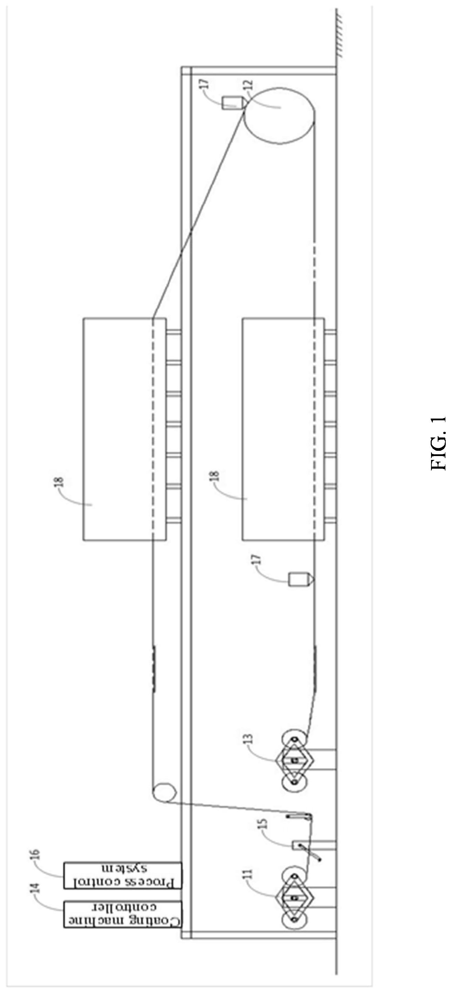

As shown in FIG. 1, the coating system may include:
a winding apparatus 11, a driving apparatus 12, an unwinding apparatus 13, and a coating machine controller 14;
where the driving apparatus 12 is configured to drive a material unwound by the unwinding apparatus 13 to move toward the winding apparatus 11, and the winding apparatus 11 is configured to wind the material; and
the coating machine controller 14 is configured to acquire state parameters of chucks for clamping reels in the winding apparatus 11, determine a target reel to be wound in the winding apparatus 11 based on the state parameters, and control the winding apparatus 11 to change reels to wind the material using the target reel when it is determined that current coating process parameters satisfy a reel change condition.

In this embodiment, state parameters of a chuck indicate whether the chuck clamps a reel or not. When one reel needs to be clamped by one chuck, state parameters of the chuck determine whether the reel is a target reel. When one reel needs to be clamped by multiple chucks, state parameters of the multiple chucks collectively determine whether the reel is a target reel. For example, it can be set that a reel is determined as a target reel only when the state parameters of the multiple chucks all indicate that the chucks clamp the reel.

In this embodiment, different state parameters of a chuck can be distinguished by different parameter values. For example, when the parameter value of the state parameter is 1, it means that the state parameter indicates that the chuck clamps a reel, and when the parameter value of the state parameter is 0, it means that the state parameter indicates the chuck does not clamp a reel. Different state parameters of a chuck can also be distinguished by addresses where the state parameters are stored. For example, state parameters stored at a first address indicate that the chuck clamps a reel, and state parameters stored at a second address indicate that the chuck does not clamp a reel.

In this embodiment, the target reel to be wound is a reel in the winding apparatus that does not perform a winding action on the material. The target reel may be an empty reel or a non-empty reel. The empty reel refers to that no material is wound on the target reel, and correspondingly, the non-empty reel refers to that a material is wound on the target reel. In practical applications, during the winding process using an empty reel, if an abnormal material is detected in the wound material, a reel with the abnormal material can be removed from the winding apparatus to eliminate the abnormal material wound on the reel, and then the reel is clamped onto a chuck. In this case, since the reel clamped onto the chuck still has a material wound on it, when this reel is determined as the target reel, the target reel is a non-empty reel.

In this embodiment, whether the target reel is an empty reel or a non-empty reel can be determined based on a reel diameter of the target reel. For an empty reel, since no material is wound on the empty reel, a reel diameter of the empty reel is typically within a specified reel diameter range. For a non-empty reel, since some materials are wound on the non-empty reel, a reel diameter of the non-empty reel is larger than the reel diameter of the empty reel, and typically, the reel diameter of the non-empty reel is also within a specified reel diameter range. It should be understood that a minimum value of the reel diameter range for determining the non-empty reel is greater than a maximum value of the reel diameter range for determining the empty reel. For example, the reel diameter range for determining the empty reel can be set as (200, 400), and the reel diameter range for determining the non-empty reel can be set as [400, +∞), where the reel diameter is measured in mm.

In this embodiment, the reel change condition indicates that the target reel in the winding apparatus meets the conditions for winding the material in the coating system, and no other reels in the winding apparatus are winding. It should be understood that no other reels in the winding apparatus being winding indicates a case where the winding of the reel that is winding has ended, a case where other reels have been mounted onto the winding apparatus via chucks but have not yet started winding, and other cases.

In actual operating conditions, for a reel that is winding, whether the winding is ended can be determined based on parameters such as the length of a material wound by the reel, a duration of winding by the reel, or a reel diameter of the reel. For example, during the winding process of a reel, the start time of winding is typically recorded, the length of the material wound by the reel since the start of winding is measured by a meter counter, and the reel diameter of the reel is calculated. Therefore, when a duration calculated from the start time of winding to the winding time of the reel is greater than a duration threshold, the length of the material wound by the reel is greater than a length threshold, or the reel diameter of the reel is greater than a reel diameter threshold, it can be determined that the winding of the reel is ended. It should be understood that the reel diameter of the reel refers to an overall reel diameter formed by the reel and the material wound on the reel. The duration threshold, the length threshold, and the reel diameter threshold can all be preset based on experience or actual needs.

In actual operating conditions, after the winding of other reels that are winding ends, if switching to the target reel for winding, during winding of the target reel, chucks clamping the other reels will clamp another target reel to be wound to enable switching to the other target reel for winding after the current target reel completes winding. To reduce resource consumption of the coating system, an occasion for clamping another target reel by the chuck or an occasion for controlling the another target reel to prepare for winding after the another target reel is clamped by the chuck can be indicated by the winding end time of the current target reel. For example, the winding end time of the target reel can be estimated based on the length of the material already wound by the target reel, the duration of winding by the reel, or the reel diameter of the reel; and then, based on this winding end time, a preset duration can be used to control the chuck to clamp another target reel or control another target reel that has been clamped to prepare for winding. The preset duration can be set based on experience or actual needs.

In this embodiment, the reel change refers to that two winding processes are performed sequentially, where a same reel or different reels can be used for performing the two winding processes sequentially. Taking a winding apparatus including a reel A and a reel B as an example, if reel A is determined as the target reel while the reel B is winding, when the current coating process parameters satisfy the reel change condition, the reel A is used for winding. In this case, different reels used for performing the two winding processes sequentially, namely, one is the reel A, and the other is the reel B. If the reel A is determined as the target reel while the reel B is winding, and before the reel B completes winding, it is detected that the material wound on the reel B contains an abnormal material, the reel B needs to be removed from the winding apparatus to eliminate the abnormal material; and then, to reduce the material waste, the reel B, which still has some normal materials wound on it after the abnormal material is eliminated, is typically reassembled into the winding apparatus, and the reel B is still used for winding the material. Typically, once the reel B is removed from the winding apparatus, it is considered that one winding process of the reel has ended. Therefore, in this case, the same reel is used for performing the two winding processes sequentially.

In the solution provided by this embodiment, based on the state parameters of the chucks for clamping reels in the winding apparatus, the target reel to be wound is determined; and when it is determined that the current coating process parameters satisfy the reel change condition, the winding apparatus is controlled to change reels to wind the material using the target reel. Through the state parameters, the coating process parameters, and the reel change condition, automatic switching to the target reel for winding the material in the winding apparatus is achieved, significantly improving the automation level of reel change.

According to some embodiments of this application, the coating machine controller 14 is configured to:
acquire a reel diameter of the target reel;
acquire, from the reel change condition, a target reel change condition having a mapping relationship with the reel diameter of the target reel; and
determine that the current coating process parameters satisfy the reel change condition when it is determined that the current coating process parameters satisfy the target reel change condition.

In actual operating conditions, when the target reel to be wound is an empty reel, the empty reel is provided with an adhesive area, and a tape transport apparatus in the coating system can automatically attach the material to the adhesive area for winding by the target reel when the target reel is used for winding the material. However, when the target reel to be wound is a non-empty reel, since the non-empty reel already has some wound materials, an adhesive area cannot be provided on the non-empty reel, making it impossible to automatically attach the material to the target reel via the tape transport apparatus. In this case, manual tape attachment is required, that is, the material is manually attached to the target reel to be wound using the target reel. In these two cases, the reel change conditions used to judge the current coating process parameters are different. Therefore, when whether the current coating process parameters satisfy the reel change condition is determined, the target reel change condition is first determined based on the reel diameter of the target reel, and then whether the current coating process parameters satisfy the reel change condition is determined.

In these embodiments, the judgment logic in different target reel change conditions within the reel change condition may partially overlap or be completely different. The coating process parameters involved in different reel change conditions may overlap or be completely different.

In these embodiments, the mapping relationship between the reel diameter and the reel change condition is preset. To simplify calculations and meet actual operating condition requirements, the reel diameter in the preset mapping relationship may actually be a reel diameter range. For example, as described above, the reel diameter range for determining the empty reel corresponds to one reel change condition, and the reel diameter range for determining the non-empty reel corresponds to another reel change condition. According to this mapping relationship, during acquisition of the target reel change condition having a mapping relationship with the reel diameter of the target reel, the reel diameter range to which the reel diameter of the target reel belongs is first determined, and then the preset mapping relationship is queried using this target reel diameter range to obtain the reel change condition corresponding to the target reel diameter range, where the reel change condition corresponding to the target reel diameter range is used as the target reel change condition.

In the solution provided by these embodiments, the target reel change condition is determined based on the reel diameter of the target reel, and the current coating process parameters are judged using the target reel change condition. Since the target reel change condition matches the reel diameter of the target reel, as compared with a case where the current coating process parameters are judged using other reel change conditions that do not match the reel diameter of the target reel, a more accurate judgment result may be obtained in a case where the current coating process parameters are judged using the target reel change condition in this embodiment.

The descriptions of the various embodiments above tend to emphasize the differences between the embodiments, and their similarities or identical aspects can be referenced mutually. For brevity, details are not repeated herein.

According to some embodiments of this application, as shown in FIG. 1, the coating system further includes:
a cutting apparatus 15 configured to cut the material passing through the cutting apparatus 15 when it is determined that the current coating process parameters satisfy the reel change condition;
where the coating machine controller 14 is configured to:
   determine that the coating process parameters satisfy the target reel change condition when a cutting action of the cutting apparatus 15 is detected; and
   determine that the coating process parameters satisfy the target reel change condition when the cutting action of the cutting apparatus 15 is not detected and coating state parameters included in the coating process parameters satisfy the target reel change condition.

In these embodiments, the cutting action of the cutting apparatus 15 indicates that the winding of the reel winding in the winding apparatus 11 has ended, meaning that the cutting action can also be used as a condition to determine whether the winding of the reel that is winding has ended. When the cutting apparatus 15 performs the cutting action, the material transported to the cutting apparatus 15 is cut, so the winding of the reel winding in the winding apparatus 11 has ended.

In these embodiments, the cutting action of the cutting apparatus 15 can also indicate that the target reel in the winding apparatus 11 is an empty reel. As mentioned above, when the target reel in the winding apparatus 11 is a non-empty reel, manual tape attachment is required for the target reel. Therefore, in this case, after the winding of the reel winding in the winding apparatus 11 ends, it is necessary to stop the entire winding apparatus 11, perform manual tape cutting, and then attach the tape to the target reel. When the target reel in the winding apparatus 11 is an empty reel, since tape attachment to the target reel can be automatically achieved through a tape attachment apparatus, there is no need to stop the winding apparatus 11 in this case. The cutting apparatus 15 is directly controlled to cut the tape, and the tape attachment apparatus is controlled to automatically attach the tape to the target reel. Therefore, when the cutting apparatus 15 performs the cutting action, it can be determined that the target reel in the winding apparatus 11 is an empty reel.

In the embodiments, as mentioned above, when the cutting apparatus 15 performs the cutting action, the reel winding in the winding apparatus 11 automatically ends winding. Since the reel winding is winding normally before the cutting apparatus 15 acts, this indicates that the winding apparatus 11 can operate normally for winding, and a coating device (such as a coating die and a slurry valve) in the coating system is also coating the material normally. Therefore, in this case, once the cutting apparatus 15 acts, it is considered that the coating process parameters satisfy the reel change condition, and winding can be performed using the target reel. However, when the cutting apparatus 15 does not perform the cutting action and the winding apparatus 11 needs to be stopped, the coating process parameters before the winding apparatus 11 stops are no longer relevant. In other words, before the winding apparatus 11 stops, the winding apparatus 11 can wind normally, and the coating device can coat the material normally, but there is no guarantee that after the winding apparatus 11 stops and restarts, the winding apparatus 11 can still wind normally and the coating device can still coat the material normally. Therefore, in this case, it is necessary to use the coating state parameters in the coating process parameters to determine the target reel change condition.

In these embodiments, the coating state parameters are parameters that affect the coating process. In practical applications, the coating state parameters include but are not limited to the following three aspects: the wound material is coated with the slurry, the target reel is not idling, and a rotation speed of the target reel is not manually controlled. The wound material being coated with slurry can be reflected by parameters indicating an operating state of the coating die and/or parameters indicating whether the slurry valve is open. The target reel being not idling can be reflected by the tape transport tension. The rotation speed of the target reel being not manually controlled can be reflected by a rotation speed of a rotating shaft on a turret. The rotation speed of the rotating shaft on the turret indicates that the reel is not manually rotated, the tape transport tension indicates that the reel is not idling, and the coating die and slurry valve indicate that the tape is not running empty. In actual operating conditions, the rotation speed of the rotating shaft on the turret can be acquired by an encoder, the tape transport tension can be acquired by a tension sensor, and the operating states of the coating die and the slurry valve can be indicated by action signals of the coating die and the slurry valve.

In these embodiments, based on the specific implementation of the coating state parameters mentioned above, when it is determined that the rotation speed is greater than a rotation speed threshold, the tape transport tension is greater than a tape transport tension threshold, the coating die is open, and the slurry valve is open, it is determined that the coating state parameters satisfy the target reel change condition.

In the solution provided by these embodiments, the determination of the target reel change condition based on the cutting action of the cutting apparatus and the coating state parameters is specified. This not only achieves automatic reel change but also features a simple and feasible solution that is more applicable to actual operating conditions.

The descriptions of the various embodiments above tend to emphasize the differences between the embodiments, and their similarities or identical aspects can be referenced mutually. For brevity, details are not repeated herein.

According to some embodiments of this application, the coating machine controller 14 is further configured to:
generate a reel change signal when it is determined that the current coating process parameters satisfy the reel change condition, where the reel change signal is used to indicate acquisition of film roll sheet information of the material wound by the target reel.

In the embodiments, the film roll sheet information includes but is not limited to data such as film roll number and film roll sheet. The film roll number is used to uniquely identify a roll formed by the material wound by the target reel. Except in special cases, even for the same reel, film roll numbers corresponding to rolls wound in different winding processes are different, and certainly, film roll numbers corresponding to rolls wound by different reels are also different. A special case where the same film roll number may be used for rolls wound in two separate winding processes by the same reel means that when rolls wound by the reel during a current winding process have film roll numbers, and during the winding process, it is detected that the rolls obtained by winding contain abnormal rolls. At this point, the reel is removed from the winding apparatus to eliminate the abnormal roll. To reduce the roll waste, the reel, which still has some normal materials wound on it, is typically reassembled into the winding apparatus. In this case, when the film roll number for the roll on the reel needs to be determined, the film roll number from the previous winding process can be used. That is, the film roll numbers corresponding to the rolls wound by the same reel in different winding processes are the same.

In these embodiments, the film roll sheet corresponds one-to-one with the film roll number and is used to record the inspection data of the roll. To understand the quality of the roll, during the process of coating the material, the coating system inspects the material using an inspection device and records the obtained data. Taking any side of the material as an example, after the slurry is applied on any side through the coating die and the slurry valve, the weight of the material can be measured using an areal density meter. Based on this weight and the original weight of the material, parameters such as the weight and coating density of the slurry applied on any side can be obtained, where these parameters reflect the coating quality and indicate the quality of the material.

In the embodiments, the reel change signal is generated using methods including but not limited to a method of writing data to a specific address or a method of writing data to a designated bit of the data. For example, the reel change signal can be generated using a method of writing 1 to a designated register address.

In the solution provided by these embodiments, as compared with a case where an operator walks to an upper computer of the coating system and manually operates to create a new film roll sheet after manual reel change, in this embodiment, after the target reel is controlled to perform winding, the reel change signal is generated to generate to generate the film roll sheet information of the material wound by the target reel, significantly reducing a time interval between the winding of the roll and the creation of the film roll sheet, and improving the consistency between the roll on the target reel and the film roll sheet information.

The descriptions of the various embodiments above tend to emphasize the differences between the embodiments, and their similarities or identical aspects can be referenced mutually. For brevity, details are not repeated herein.

According to some embodiments of this application, the coating system further includes a process control system 16; and
the coating machine controller 14 is further configured to:
update state parameters corresponding to a chuck for clamping the target reel when it is determined that the process control system 16 has acquired the film roll sheet information based on the reel change signal.

In these embodiments, a connection state corresponding to the chuck for clamping the target reel has different meanings before and after the update. For example, if the connection state before the update indicates that the chuck clamps the target reel, the connection state after the update indicates that the chuck does not clamp the target reel; conversely, if the connection state before the update indicates that the chuck does not clamp the target reel, the connection state after the update indicates that the chuck clamps the target reel.

In the solution provided by these embodiments, updating the state parameters corresponding to the chuck of the target reel can facilitate the accurate determination of a new target reel subsequently. In addition, the updating occasion can reduce unnecessary processing procedures. For example, if the state parameters are updated after a time interval following the acquisition of the film roll sheet information, the current target reel may be inevitably identified as a new target reel during subsequent determination of the new target reel. Although the current target reel can be excluded through later reel change conditions, both the process of excluding the current target reel and the process of determining the current target reel as the new target reel may complicate the overall procedure.

The descriptions of the various embodiments above tend to emphasize the differences between the embodiments, and their similarities or identical aspects can be referenced mutually. For brevity, details are not repeated herein.

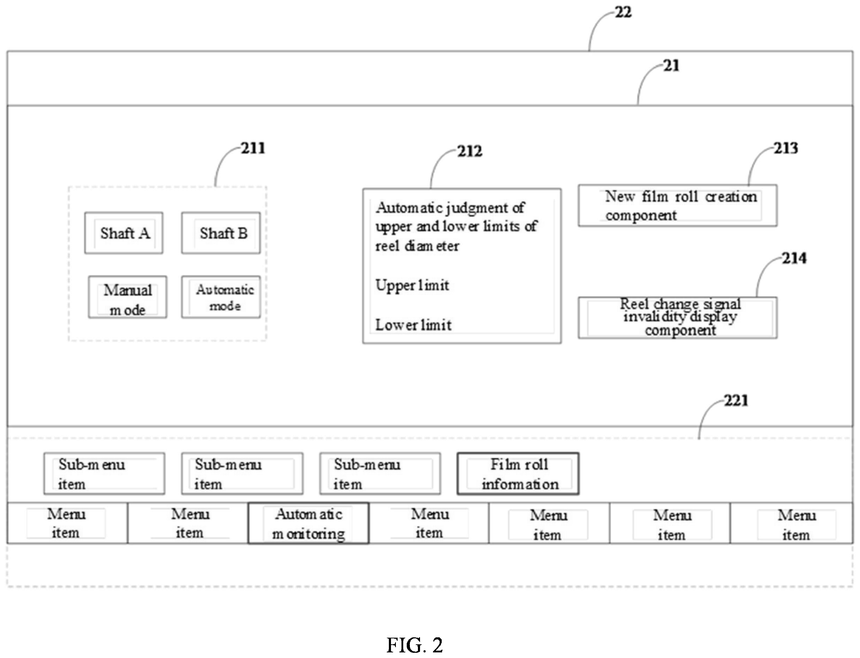

According to some embodiments of this application, the coating machine controller 14 includes a display screen; as shown in FIG. 2, the display screen is configured to display a film roll management interface 21, and the film roll management interface 21 includes a mode configuration component 211; and
the coating machine controller 14 is configured to, when a user configures a winding mode of the target reel as an automatic mode through the mode configuration component 211, perform the following steps: acquiring the state parameters of the chucks for clamping reels in the winding apparatus; determining the target reel to be wound in the winding apparatus based on the state parameters; and controlling the winding apparatus to change reels to wind the material using the target reel when it is determined that the current coating process parameters satisfy the reel change condition.

In these embodiments, the mode configuration component 211 includes a reel information display component and a mode selection component, where information displayed by the reel information display component is used to uniquely identify a reel in the winding apparatus; and the mode selection component is configured for the user to select a reel change mode of a reel, and the mode selection component supports the user to choose one from a manual mode and an automatic mode.

In the solution provided by these embodiments, the mode configuration component allows the user to select manual reel change or automatic reel change based on actual needs, helping to improve the flexibility in reel change.

According to some embodiments of this application, as shown in FIG. 2, the film roll management interface 21 further includes a reel diameter display component 212;
where the reel diameter display component 212 is configured for the user to configure a reel diameter threshold in the reel change condition.

In the solution provided by these embodiments, providing the reel diameter display component on the film roll management interface enables the user to configure the reel diameter threshold in the reel change condition, helping the user to set the reel change condition based on their needs.

According to some embodiments of this application, as shown in FIG. 2, the film roll management interface 21 further includes a new film roll creation component 213 and a reel change signal invalidity display component 214; and
the coating machine controller 14 is further configured to: when the target reel is a non-empty reel, detect a new film roll creation instruction triggered by the user through the new film roll creation component 213 within a preset duration for generating the reel change signal, and mark the reel change signal as valid when the new film roll creation instruction is detected; and when the new film roll creation instruction is not detected within the preset duration for generating the reel change signal, display, through the reel change signal invalidity display component 214, indication information for indicating that the reel change signal is invalid, and set identification information for indicating the adoption of film roll sheet information from the most recent winding process.

As mentioned above, a reel carrying a material includes at least the following two cases: in a first case, the reel is removed from the winding apparatus during the winding process to eliminate an abnormal material, and then the reel is reassembled into the winding apparatus; and in a second case, the target reel to be wound carries the material. For the first case, since the same reel is used for winding both times, it is unnecessary to waste the process of creating film roll sheet information to create new film roll sheet information. For the second case, since it is difficult to determine when the material on the target reel is wound, it is necessary to create new film roll sheet information through the process of creating film roll sheet information during winding using the target reel. Based on the existence of the above at least two cases, within the preset duration for generating the reel change signal, the new film roll creation instruction triggered by the user through the new film roll creation component determines whether to automatically generate the film roll sheet information corresponding to the target reel. When the new film roll creation instruction triggered by the user is received within the preset duration, the reel change signal is marked as valid to automatically generate the film roll sheet information corresponding to the target reel.

In the solution provided by these embodiments, marking the reel change signal through the new film roll creation instruction of the new film roll creation component can improve the accuracy of the film roll sheet information for the target reel.

The descriptions of the various embodiments above tend to emphasize the differences between the embodiments, and their similarities or identical aspects can be referenced mutually. For brevity, details are not repeated herein.

According to some embodiments of this application, the coating machine controller 14 is configured to:
display the film roll management interface 21 when a target menu item selected in a menu bar 221 of the interface 22 of the display screen is automatic control, and a sub-menu item selected in the target menu item is film roll sheet information.

In the solution provided by these embodiments, the settings of the menu item and sub-menu item in the interface of the display screen enable the interface of the display screen to display not only the film roll management interface but also other interfaces as needed, helping to improve the utilization of the display screen.

The descriptions of the various embodiments above tend to emphasize the differences between the embodiments, and their similarities or identical aspects can be referenced mutually. For brevity, details are not repeated herein.

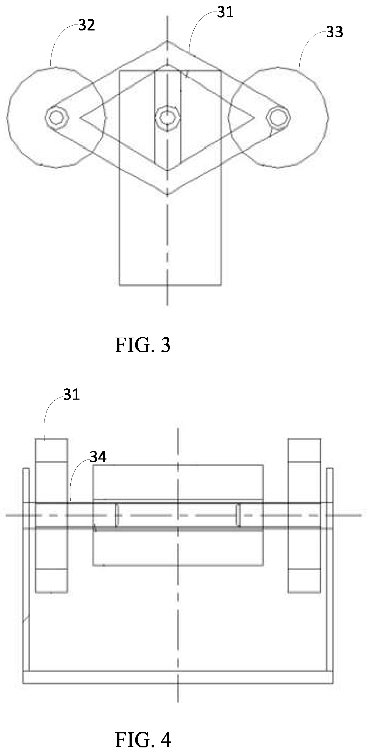

According to some embodiments of this application, as shown in FIG. 3 and FIG. 4, the winding apparatus 11 includes:
a turret 31, a first rotating shaft 32 and a second rotating shaft 33 disposed on the turret 31, a first chuck 34 disposed on the first rotating shaft 32, and a second chuck (not shown in the figure) disposed on the second rotating shaft 33;
where the first chuck 34 is configured to clamp a first reel, and the second chuck 35 is configured to clamp a second reel; and
the coating machine controller 14 is configured to: acquire state parameters of the first chuck 34 and the second chuck 35; and determine the target reel from the first reel and the second reel based on the state parameters of the first chuck 34 and the second chuck 35.

According to the winding apparatus provided by these embodiments, the structures of the turret and the rotating shafts allow the winding apparatus to support multiple reels, laying the foundation for automatic reel change.

The descriptions of the various embodiments above tend to emphasize the differences between the embodiments, and their similarities or identical aspects can be referenced mutually. For brevity, details are not repeated herein.

According to some embodiments of this application, as shown in FIG. 1, the coating system further includes:
a coating die 17 and a coating oven 18;
where the coating die 17 is configured to coat the material passing through the coating die 17; and
the coating oven 18 is configured to bake the material coated by the coating die 17.

In the solution provided by these embodiments, coating the material using the coating die and the coating oven helps to improve the coating efficiency of the coating system for the material.

The descriptions of the various embodiments above tend to emphasize the differences between the embodiments, and their similarities or identical aspects can be referenced mutually. For brevity, details are not repeated herein.

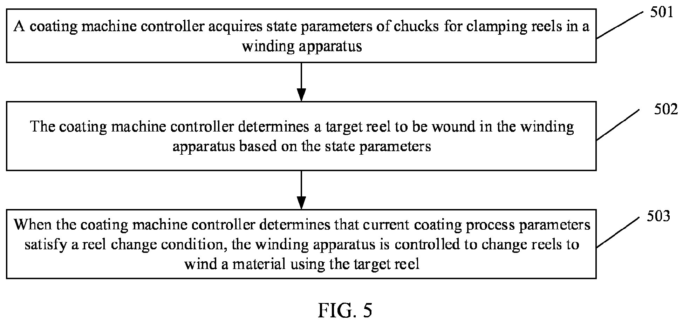

According to some embodiments of this application, a coating method is provided, applied to the coating system described above. As shown in FIG. 5, the method includes the following steps.

Step 501: A coating machine controller acquires state parameters of chucks for clamping reels in a winding apparatus.

Step 502: The coating machine controller determines a target reel to be wound in the winding apparatus based on the state parameters.

Step 503: When the coating machine controller determines that current coating process parameters satisfy a reel change condition, the winding apparatus is controlled to change reels to wind a material using the target reel.

In some embodiments, the determining, by the coating machine controller, that current coating process parameters satisfy a reel change condition includes:
acquiring, by the coating machine controller, a reel diameter of the target reel;
acquiring, by the coating machine controller from the reel change condition, a target reel change condition having a mapping relationship with the reel diameter of the target reel; and
when the coating machine controller determines that the current coating process parameters satisfy the target reel change condition, determining that the current coating process parameters satisfy the reel change condition.

In some embodiments, the coating system further includes a cutting apparatus; and
the determining, by the coating machine controller, that the current coating process parameters satisfy a target reel change condition includes:
determining, by the coating machine controller, that the coating process parameters satisfy the target reel change condition when a cutting action of the cutting apparatus is detected; and
determining, by the coating machine controller, that the coating process parameters satisfy the target reel change condition when the cutting action of the cutting apparatus is not detected and coating state parameters included in the coating process parameters satisfy the target reel change condition.

In some embodiments, the method further includes:
generating, by the coating machine controller, a reel change signal when it is determined that the current coating process parameters satisfy the reel change condition, where the reel change signal is used to indicate acquisition of film roll sheet information of the roll wound by the target reel.

In some embodiments, the coating system further includes a process control system; and
the method further includes:
updating, by the coating machine controller, state parameters corresponding to a chuck for clamping the target reel when it is determined that the process control system has acquired the film roll sheet information based on the reel change signal.

In some embodiments, the coating system further includes a display screen; and the coating machine controller is configured to display a film roll management interface through the display screen, the film roll management interface including a new film roll creation component, where the new film roll creation component is configured for a user to trigger a new film roll creation instruction; and
the method further includes:
detecting, by the new film roll creation component when the target reel is a non-empty reel, a new film roll creation instruction triggered by the user within a preset duration for generating the reel change signal, and marking the reel change signal as valid when the new film roll creation instruction is detected; and displaying, by the reel change signal invalidity display component when the new film roll creation instruction is not detected within the preset duration for generating the reel change signal, indication information for indicating that the reel change signal is invalid, and setting identification information for indicating the adoption of film roll sheet information from the most recent winding process.

In some embodiments, the method further includes:
displaying the film roll management interface when a target menu item selected in a menu bar of the interface of the display screen is automatic control, and a sub-menu item selected in the target menu item is film roll sheet information.

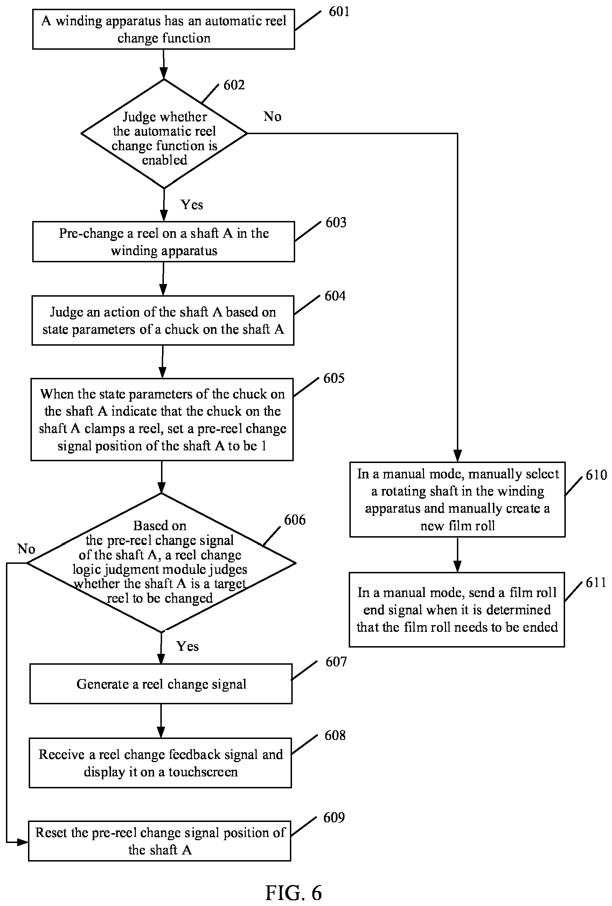

The following describes an analysis process of a coating method with a specific example. As shown in a schematic flowchart in FIG. 6, the specific example includes the following steps.

Step 601: A winding apparatus has an automatic reel change function.

Step 602: Judge whether the automatic reel change function is enabled; if yes, proceed to step 603; otherwise, proceed to step 610.

Step 603: Pre-change a reel on a shaft A in the winding apparatus.

Step 604: Judge an action of the shaft A based on state parameters of a chuck on the shaft A.

Step 605: When the state parameters of the chuck on the shaft A indicate that the chuck on the shaft A clamps a reel, set a pre-reel change signal position of the shaft A to be 1.

Step 606: Based on the pre-reel change signal of the shaft A, a reel change logic judgment module judges whether the shaft A is a target reel to be changed; if yes, proceed to step 607; otherwise, proceed to step 608.

Step 607: Generate a reel change signal.

Step 608: Receive a reel change feedback signal and display it on a touchscreen.

Step 609: Reset the pre-reel change signal position of the shaft A.

Step 610: In a manual mode, manually select a rotating shaft in the winding apparatus and manually create a new film roll.

Step 611: In a manual mode, send a film roll end signal when it is determined that the film roll needs to be ended.

The pre-reel change signal refers to a state parameter of a chuck of a reel.

The shaft A is any rotating shaft in a reel change apparatus.

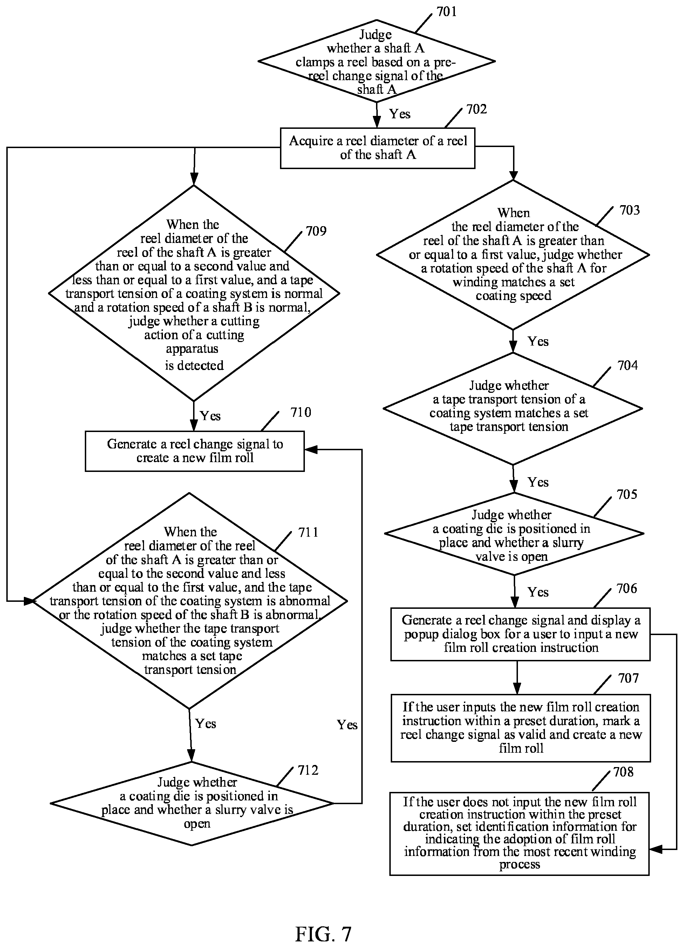

As shown in FIG. 7, the judgment process of the reel change logic judgment module in Step 606 may include the following steps.

Step 701: Judge whether the shaft A clamps a reel based on the pre-reel change signal of the shaft A; if yes, proceed to step 702.

Step 702: Acquire a reel diameter of a reel of the shaft A.

Step 703: When the reel diameter of the reel of the shaft A is greater than or equal to a first value, judge whether a rotation speed of the shaft A for winding matches a set coating speed; if yes, proceed to step 704.

Step 704: Judge whether a tape transport tension of the coating system matches a set tape transport tension; if yes, proceed to step 705.

Step 705: Judge whether a coating die is positioned in place and whether a slurry valve is open; if yes, proceed to step 706.

Step 706: Generate a reel change signal and display a popup dialog box for a user to input a new film roll creation instruction.

Step 707: If the user inputs the new film roll creation instruction within a preset duration, mark a reel change signal as valid and create a new film roll.

Step 708: If the user does not input the new film roll creation instruction within the preset duration, set identification information for indicating the adoption of film roll sheet information from the most recent winding process;

Step 709: When the reel diameter of the reel of the shaft A is greater than or equal to a second value and less than or equal to the first value, and the tape transport tension of the coating system is normal and a rotation speed of a shaft B is normal, judge whether a cutting action of the cutting apparatus is detected; if yes, proceed to step 710.

Step 710: Generate a reel change signal to create a new film roll.

Step 711: When the reel diameter of the reel of the shaft A is greater than or equal to the second value and less than or equal to the first value, and the tape transport tension of the coating system is abnormal or the rotation speed of the shaft B is abnormal, judge whether the tape transport tension of the coating system matches a set tape transport tension; if yes, proceed to step 712.

Step 712: Judge whether the coating die is positioned in place and whether the slurry valve is open; if yes, proceed to step 713; if yes, proceed to step 710.

The first value is greater than the second value. If the judgment result in step 702, steps 703 to 705, step 709, step 711, or step 712 is no, the process ends.

Taking the coating system with two rotating shafts as shown in FIG. 3 and FIG. 4 as an example, multiple solutions for performing the reel change method according to one or more embodiments of this application are described below.

For the shaft A and the shaft B in FIG. 1, for ease of description, it is assumed that each shaft has one chuck, and state parameters of the chuck determine whether to clamp a reel, in a solution for performing the reel change method according to the embodiments of this application, state parameters of chucks of the shaft A and the shaft B have the following three combinations.

In the following description, N on the shaft A represents the state parameters of the chuck on the shaft A, N on the shaft B represents the state parameters of the chuck on the shaft B, 1 on the shaft A indicates that the chuck on the shaft A clamps a reel, 0 on the shaft A indicates that the chuck on the shaft A does not clamp a reel, 1 on the shaft B indicates that the chuck on the shaft B clamps a reel, and 0 on the shaft B indicates that the chuck on the shaft B does not clamp a reel.

A first combination includes 1 on the shaft A and 0 on the shaft B.

In this combination, there are the following two solutions.

A first solution is as follows: The shaft B is winding, and a new reel is mounted on the shaft A. At this point, a process is initiated to determine whether to start the reel change method for the shaft A. If the reel diameter of the reel of the shaft A is greater than the first value (the first value indicates that the reel of the shaft A is a non-empty reel), since automatic tape attachment cannot be implemented by the A shaft, manual tape attachment is required, and the manual tape attachment needs to stop the winding apparatus, cut the tape of the shaft B, and attach the tape of the shaft B to the empty reel of the shaft A. Then, when the rotation speed of the shaft A, the tape transport tension, the coating die positioning, and the slurry valve in the coating system all satisfy the reel change condition, the reel of the shaft A is used for winding. The rotation speed of the shaft A satisfying the reel change condition indicates that the reel is not manually rotated for adjustment, the tape transport tension indicates that the material has been attached to the reel and the reel is not idling, and the coating die positioning and the slurry valve being open indicate that the tape is not running empty. After these conditions are met, a new film roll is manually selected based on the display interface.

If the reel diameter of the reel of the shaft A is not greater than the first value and is greater than the second value, where the first value is greater than the second value (indicating that the reel of the shaft A is an empty reel), and the shaft B is winding, a cutting action is considered as automatic reel change. If no cutting action occurs, after the shaft B completes winding, it is necessary to stop the machine to manually attach the tape to the shaft A. If the shaft A (the rotation speed of the shaft A, the tape transport tension, the coating die positioning, and the slurry valve) satisfies the reel change condition, winding is performed by the shaft A.

A second solution is as follows: The shaft B has no reel or has completed winding for a period of time. In this case, the shaft B will not rotate at the set tape transport speed and may only be manually rotated at a low speed. A new reel is mounted on the shaft A. If the reel diameter of the reel of the shaft A is greater than the first value, manual tape attachment is required. Typically, after the shaft A winds a certain length and an abnormal material is detected, the chuck is opened to remove the reel, the abnormal material is eliminated, and the reel is returned to the shaft A. After the conditions (the rotation speed of the shaft A, the tape transport tension, the coating die positioning, and the slurry valve) are satisfied, a popup prompts to choose whether to continue the film roll. If the reel diameter of the reel of the shaft A is not greater than the first value and is greater than the second value, where the first value is greater than the second value (indicating that the reel of the shaft A is an empty reel), since the shaft B is empty or has completed winding and the speed does not match, manual tape attachment is also required. After the conditions (the rotation speed of the shaft A, the tape transport tension, the coating die positioning, and the slurry valve) are satisfied, winding is performed by the shaft A.

A second combination includes 0 on the shaft A and 1 on the shaft B. This combination is similar to the first combination, with the same principles, and is not elaborated herein.

A third combination includes 1 on the shaft A and 1 on the shaft B.

In this combination, there are the following two solutions.

A first solution is as follows: A new empty reel is mounted on the shaft A, and a new empty reel is mounted on the shaft B. At this point, the reel diameter will be not greater than the first value and greater than the second value. Since the other shaft is not automatically winding, manual tape attachment is required. The shaft that satisfies the conditions (the rotation speed, the tape transport tension, the coating die positioning, and the slurry valve) first is used for winding.

A second solution is as follows: The reel of the shaft A is a non-empty reel, and a new empty reel is mounted on the shaft B. At this point, the shaft A is preferentially used and manual tape attachment is required. After the shaft A satisfies the conditions, a popup prompts to manually select a new film roll number (if an empty foil material is provided) or continue the film roll number (if the abnormal material is eliminated and the reel is remounted). In special cases, the shaft B can be used for winding. At this point, the shaft B is an empty reel. If the shaft A is already running at the matched speed (indicating that the shaft A is manually attached and has been winding a foil material without coating, which typically occurs only during the debugging phase), the shaft B can normally perform automatic tape attachment and reel change and create a new film roll number. If the shaft A is not running, the shaft B can only be manually attached, and after the conditions are satisfied, a reel change signal is triggered.

It should be noted that:
the term "module" is not intended to be limited to a specific physical form. Depending on the specific application, a module can be implemented as hardware, firmware, software, and/or a combination thereof. In addition, different modules may share common components or even be implemented by the same component. There may or may not be clear boundaries between different modules.

The algorithm and display provided herein are not inherently related to any specific computer, virtual apparatus, or other devices. Various general-purpose apparatuses can also be used with the examples provided herein. Based on the above description, the structure required to construct such apparatus is apparent. Furthermore, this application is not directed to any specific programming language. It should be understood that the content of this application described herein can be implemented using various programming languages, and the descriptions of specific languages above are for disclosing the best implementation of this application.

It should be understood that, although the steps in the flowcharts of the drawings are shown sequentially as indicated by arrows, these steps are not necessarily performed in the order indicated by the arrows. Unless explicitly stated herein, the execution of these steps is not strictly limited to a specific order and can be performed in other orders. Moreover, at least some of the steps in the flowcharts of the drawings may include multiple sub-steps or multiple stages. These sub-steps or stages are not necessarily completed at the same time but can be performed at different times. Their execution order is not necessarily sequential but can be performed alternately or interchangeably with other steps or at least some of the sub-steps or stages of other steps.

The above embodiments merely express the implementation of this application, and their descriptions are relatively specific and detailed but should not be construed as limiting the scope of the patent of this application. It should be noted that, for those of ordinary skill in the art, several variations and improvements can be made without departing from the concept of this application, and these variations and improvements all fall within the scope of protection of this application. Therefore, the scope of protection of this application should be determined by the appended claims.

## Claims

1. A coating system, comprising:
a winding apparatus, a driving apparatus, an unwinding apparatus, and a coating machine controller;
wherein the driving apparatus is configured to drive a material unwound by the unwinding apparatus to move toward the winding apparatus, and the winding apparatus is configured to wind the material; and
the coating machine controller is configured to acquire state parameters of chucks for clamping reels in the winding apparatus, determine a target reel to be wound in the winding apparatus based on the state parameters, and control the winding apparatus to change reels to wind the material using the target reel when it is determined that current coating process parameters satisfy a reel change condition.

2. The coating system according to claim 1, wherein the coating machine controller is configured to:
acquire a reel diameter of the target reel;
acquire, from the reel change condition, a target reel change condition having a mapping relationship with the reel diameter of the target reel; and
determine that the current coating process parameters satisfy the reel change condition when it is determined that the current coating process parameters satisfy the target reel change condition.

3. The coating system according to claim 2, wherein the coating system further comprises:
a cutting apparatus configured to cut the material passing through the cutting apparatus when it is determined that the current coating process parameters satisfy the reel change condition;
wherein the coating machine controller is configured to:
determine that the coating process parameters satisfy the target reel change condition when a cutting action of the cutting apparatus is detected; and
determine that the coating process parameters satisfy the target reel change condition when the cutting action of the cutting apparatus is not detected and coating state parameters comprised in the coating process parameters satisfy the target reel change condition.

4. The coating system according to any one of claims 1 to 3, wherein the coating machine controller is further configured to:
generate a reel change signal when it is determined that the current coating process parameters satisfy the reel change condition, wherein the reel change signal is used to indicate acquisition of film roll sheet information of the material wound by the target reel.

5. The coating system according to claim 4, wherein the coating system further comprises a process control system; and
the coating machine controller is further configured to:
update state parameters corresponding to a chuck for clamping the target reel when it is determined that the process control system has acquired the film roll sheet information based on the reel change signal.

6. The coating system according to claim 4, wherein the coating machine controller comprises a display screen, the display screen is configured to display a film roll management interface, and the film roll management interface comprises a mode configuration component; and
the coating machine controller is configured to, when a user configures a winding mode of the target reel as an automatic mode through the mode configuration component, perform the following steps: acquiring the state parameters of the chucks for clamping reels in the winding apparatus; determining the target reel to be wound in the winding apparatus based on the state parameters; and controlling the winding apparatus to change reels to wind the material using the target reel when it is determined that the current coating process parameters satisfy the reel change condition.

7. The coating system according to claim 6, wherein the film roll management interface further comprises a reel diameter display component;
wherein the reel diameter display component is configured for the user to configure a reel diameter threshold in the reel change condition.

8. The coating system according to claim 6, wherein the film roll management interface further comprises a new film roll creation component and a reel change signal invalidity display component; and
the coating machine controller is further configured to: when the target reel is a non-empty reel, detect a new film roll creation instruction triggered by the user through the new film roll creation component within a preset duration for generating the reel change signal, and mark the reel change signal as valid when the new film roll creation instruction is detected; and when the new film roll creation instruction is not detected within the preset duration for generating the reel change signal, display, through the reel change signal invalidity display component, indication information for indicating that the reel change signal is invalid, and set identification information for indicating the adoption of film roll sheet information from the most recent winding process.

9. The coating system according to claim 6, wherein the coating machine controller is configured to:
display the film roll management interface when a target menu item selected in a menu bar of an interface of the display screen is automatic control, and a sub-menu item selected in the target menu item is film roll sheet information.

10. The coating system according to any one of claims 1 to 9, wherein the winding apparatus comprises:
a turret, a first rotating shaft and a second rotating shaft disposed on the turret, a first chuck disposed on the first rotating shaft, and a second chuck disposed on the second rotating shaft;
wherein the first chuck is configured to clamp a first reel, and the second chuck is configured to clamp a second reel; and
the coating machine controller is configured to: acquire state parameters of the first chuck and the second chuck; and determine the target reel from the first reel and the second reel based on the state parameters of the first chuck and the second chuck.

11. The coating system according to any one of claims 1 to 10, wherein the coating system further comprises:
a coating die and a coating oven;
wherein the coating die is configured to coat the material passing through the coating die; and
the coating oven is configured to bake the material coated by the coating die.

12. A coating method, applied to the coating system according to any one of claims 1 to 11, wherein the method comprises:
acquiring, by the coating machine controller, state parameters of chucks for clamping reels in the winding apparatus;
determining, by the coating machine controller, a target reel to be wound in the winding apparatus based on the state parameters; and
controlling, by the coating machine controller, the winding apparatus to change reels to wind a material using the target reel when determining that current coating process parameters satisfy a reel change condition.

13. The coating method according to claim 12, wherein the determining, by the coating machine controller, that current coating process parameters satisfy a reel change condition comprises:
acquiring, by the coating machine controller, a reel diameter of the target reel;
acquiring, by the coating machine controller from the reel change condition, a target reel change condition having a mapping relationship with the reel diameter of the target reel; and
determining, by the coating machine controller, that the current coating process parameters satisfy the reel change condition when determining that the current coating process parameters satisfy the target reel change condition.

14. The coating method according to claim 13, wherein the coating system further comprises a cutting apparatus; and
the determining, by the coating machine controller, that the current coating process parameters satisfy the target reel change condition comprises:
determining, by the coating machine controller, that the coating process parameters satisfy the target reel change condition when a cutting action of the cutting apparatus is detected; and
determining, by the coating machine controller, that the coating process parameters satisfy the target reel change condition when the cutting action of the cutting apparatus is not detected and coating state parameters comprised in the coating process parameters satisfy the target reel change condition.

15. The coating method according to any one of claims 12 to 14, wherein the method further comprises:
generating, by the coating machine controller, a reel change signal when it is determined that the current coating process parameters satisfy the reel change condition, wherein the reel change signal is used to indicate acquisition of film roll sheet information of a roll wound by the target reel.

16. The coating method according to claim 15, wherein the coating system further comprises a process control system; and
the method further comprises:
updating, by the coating machine controller, state parameters corresponding to a chuck for clamping the target reel when it is determined that the process control system has acquired the film roll sheet information based on the reel change signal.

17. The coating method according to claim 15, wherein the coating system further comprises a display screen; and the coating machine controller is configured to display a film roll management interface through the display screen, the film roll management interface comprising a new film roll creation component, wherein the new film roll creation component is configured for a user to trigger a new film roll creation instruction; and
the method further comprises:
detecting, by the new film roll creation component when the target reel is a non-empty reel, a new film roll creation instruction triggered by the user within a preset duration for generating the reel change signal, and marking the reel change signal as valid when the new film roll creation instruction is detected; and displaying, by the reel change signal invalidity display component when the new film roll creation instruction is not detected within the preset duration for generating the reel change signal, indication information for indicating that the reel change signal is invalid, and setting identification information for indicating the adoption of film roll sheet information from the most recent winding process.

18. The coating method according to claim 17, wherein the method further comprises:
displaying the film roll management interface when a target menu item selected in a menu bar of an interface of the display screen is automatic control, and a sub-menu item selected in the target menu item is film roll sheet information.
